# EUROPÄISCHE PATENTSCHRIFT

(11) **EP 0 591 724 B1**
(45) Veröffentlichungstag und Bekanntmachung des Hinweises auf die Patenterteilung: **06.12.1995**
(21) Anmeldenummer: 93114806.8
(22) Anmeldetag: 15.09.1993
(51) Int. Cl.: H02K 21/22, B62J 6/12

(54) **Nabenlichtmaschine, insbesondere für Fahrräder**
Hub generator, especially for bicycles
Moyeu générateur, en particulier pour bicyclettes

(30) Priorität: 25.09.1992 DE 4232182
(43) Veröffentlichungstag der Anmeldung: 13.04.1994
(73) Patentinhaber: Schmidt, Wilfried, D-89077 Ulm (DE)
(72) Erfinder: Schmidt, Wilfried, D-89077 Ulm (DE)
(74) Vertreter: Cohausz, Helge B., Dipl.-Ing.

(56) Entgegenhaltungen:
- WO-A-84/04285
- CH-A- 164 318
- DE-A- 3 313 212
- DE-A- 4 114 259
- DE-U- 9 101 370
- FR-A- 2 356 301

## Beschreibung

Die Erfindung betrifft eine Nabenlichtmaschine, insbesondere für Fahrräder.

Übliche Fahrraddynamos werden durch eine Reibrolle am Reifen oder an der Felge angetrieben. Dieser Antrieb ist für die hohen Leistungsverluste und die mangelnde Betriebssicherheit (Durchrutschen bei Nässe oder Schnee) verantwortlich. Eine in die Radnabe integrierte Lichtmaschine (Die gesamte Einheit aus Nabe und Lichtmaschine wird im folgenden "Nabendynamo" genannt) vermeidet diese Nachteile. Allerdings muß wegen der geringen Drehzahl des Rades entweder ein stark ins Schnelle übersetzendes Getriebe oder eine Lichtmaschine, die wesentlich größer und damit auch schwerer ist als die der genannten Reibrollendynamos, verwendet werden. Ein mechanisches Getriebe ist aufwendig herzustellen und verringert den Wirkungsgrad, außerdem sind unangenehme Laufgeräusche und Verschleiß möglich.

Aus der DE-OS 27.27.827 ist ein getriebsloser Nabendynamo bekannt, bei welchem die Lichtmaschine außerhalb des durch die Nabenhülse, die beiden Radlager und die Achse begrenzten Bauraumes angeordnet ist.

Aus dem DE-GM 91 01 370 ist ein Dynamo, insbesondere für Fahrräder mit stillstehendem Dynamoblechpaket mit Spulenwickel zur Stromabnahme und in deren Bereich drehendem Dauermagnet bekannt, bei dem um die stehende Radachse Dauermagnete in der sich drehenden Achsbuchse um die Spule drehbar angeordnet sind.

Die DE-A-33 13 212 beschreibt einen getriebelosen Nabendynamo mit zwischen den Lagern angeordnetem Generator in T-Anker-Bauart, also mit zur Nabenachse senkrechten Spulenachsen.

Aufgabe der vorliegenden Erfindung ist es, eine Nabenlichtmaschine anzugeben, die bei hohem Wirkungsgrad ein geringes Gewicht aufweist.

Die erfindungsgemäße Lösung dieser Aufgabe ist in Anspruch 1 beschrieben. Die Unteransprüche enthalten vorteilhafte Ausgestaltungen und Weiterbildungen der Erfindung.

Durch den geringen Spulendurchmesser wird (gegenüber einer Spule mit größerem Durchmesser) die Drahtlänge und damit das Gewicht der Spule reduziert, wobei die reduzierte Drahtlänge zusätzlich eine Verringerung des Spulenwiderstands oder durch Verringerung des Drahtdurchmessers eine weitere Gewichtsreduzierung ermöglicht. Durch die Doppelausnutzung des Spulenkerns zur Führung des magnetischen Flusses und zur mechanischen Achsversteifung ergibt sich gegenüber getrennten Bauteilen für jede dieser Funktionen ebenfalls eine Gewichtsrezudzierung. Eine derartige Doppelfunktion erfüllt schließlich auch die Ausnutzung eines mechanisch trangenden Teils der Nabenhülse als Rückschlußring der Dauermagnetanordnung. Die Gewichtsreduzierung wird dabei ohne Einschränkung des Wirkungsgrades gegenüber aus dem Stand der Technik bekannten Nabenlichtmaschinen erreicht. Die erfindungsgemäßen Lösungen können sowohl unabhängig als auch vorzugsweise in Kombination zur Erreichung des angestrebten Ziels eingesetzt werden.

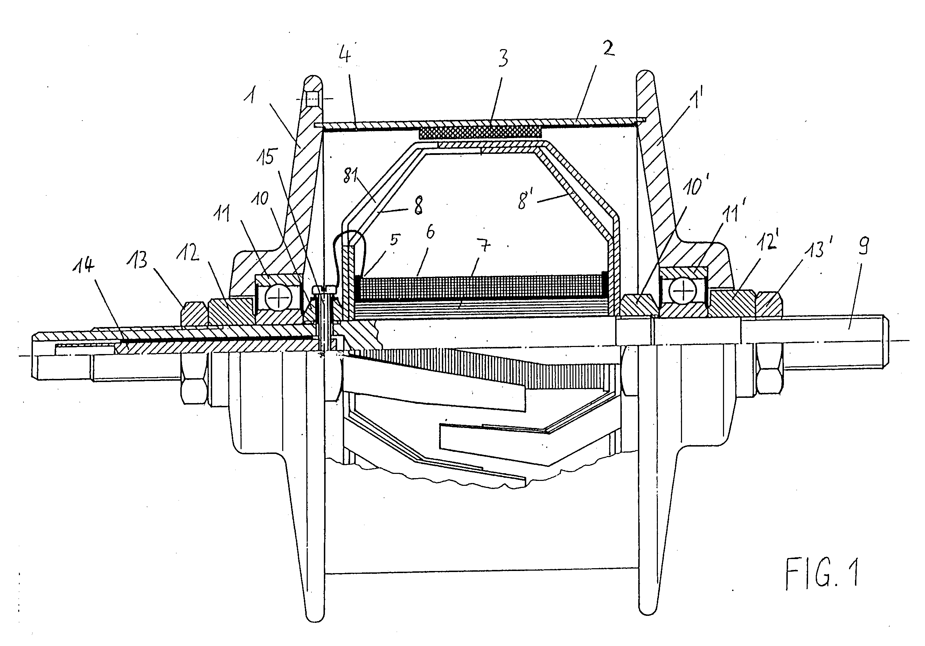

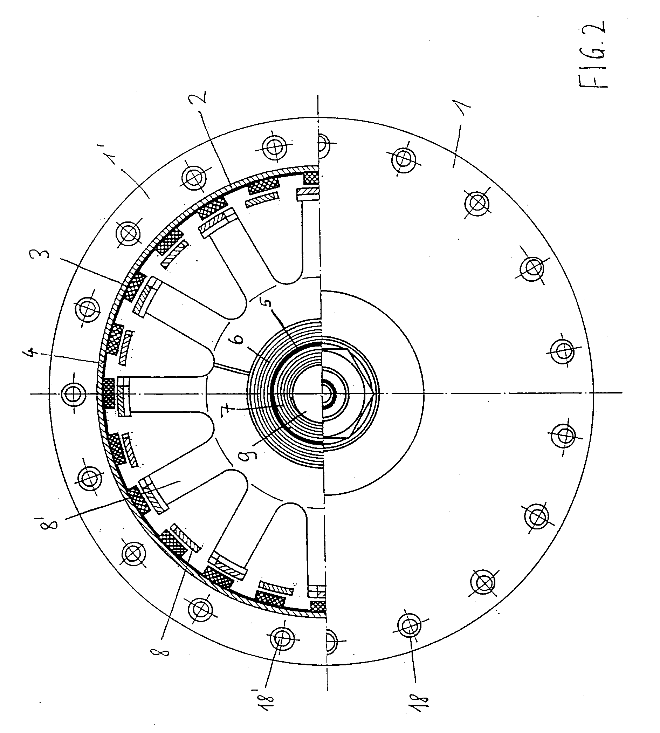

Die Erfindung ist nachfolgend anhand von Ausführungsbeispielen unter Bezugnahme auf die Abbildungen noch eingehend veranschaulicht. Figur 1 zeigt einen Halbschnitt in Längsrichtung einer erfindungsgemäßen Nabenlichtmaschine, Figur 2 zeigt den Halbschnitt in der Mittelebene dieser Nabe.

Die Nabenhülse weist zwei Speichenflansche 1, 1′ mit Speichenlöchern 18,18′ sowie ein rohrförmiges Mittelteil 2, welches im eingespeichten Zustand eine feste Verbindung zwischen den Speichenflanschen herstellt, auf. Am Innenumfang des Rohres 2 sind die in radialer Richtung magnetisierten Einzelmagnete 3 des mehrpoligen Dauermagnetrotors in abwechselnder Polarität angeordnet. Das Rohr 2 besteht aus magnetisierbarem Material, vorzugsweise weichmagnetischem Stahl, so daß die Einzelmagnete 3 durch die magnetische Anziehungskraft an der Rohrwand haften und das Rohr einen magnetischen Rückschlußring für den Dauermagnetrotor bildet. Die Einzelmagnete sind vorzugsweise quaderförmig. Sie werden durch einen Magnethalter 4 am Verrutschen gehindert. Der Magnethalter besteht vorteilhafterweise aus einer dünnen rechteckigen Kunststoffplatte, die Aussparungen für die Einzelmagnete 3 aufweist und zu einem Ring gebogen in das Rohr 2 gelegt wird. Die Einzelmagnete werden in fertigungstechnisch einfacher Weise in die Aussparungen eingelegt. Zusätzlich kann eine Verklebung der Einzelmagneten auf der Rohrinnenwand vorgesehen sein.

Der Stator besteht im wesentlichen aus einer auf einen Spulenkörper 5 gewickelten Spule 6, einen Spulenkern 7 und zwei Polkörpern 8,8′, die den magnetischen Fluß von Dauermagnetrotor zum Spulenkern umleiten. Wesentlich an der skizzierten Anordnung ist, daß die Spule 6 einen geringen Außendurchmesser aufweist und der Innendurchmesser des Dauermagnetrotors wesentlich, bei Verwendung von Aluminium als elektrischer Leiter mindestens 50%, bei Verwendung von Kupfer mindestens 50%, vorzugsweise mehr als 100% größer ist. Der sich ergebende freie Raum zwischen Spule und Magnetrotor wird durch die Polkörper 8,8′ überbrückt. Auf diese Weise werden die Vorteile eines großen Rotordurchmessers, nämlich die Möglichkeit, eine große Anzahl von Polen unterzubringen, was sowohl in Hinblick auf die Größe als auch die Frequenz der induzierten Spannung von Bedeutung ist, und eines geringen Spulendurchmessers miteinander verknüpft. Die Spule 6 ist möglichst dicht an der Achse 9 und über einen möglichst breiten Achsenabschnitt zwischen den Lagern 11,11′ gewickelt. Vorzugsweise ist die Spulenbreite wesentlich größer als der Spulenradius.

Die Polkörper 8,8′ bestehen aus jeweils 2 Blechscheiben mit nach außen weisenden Klauen, die zweimal umgebogen sind, sodaß die Klauenenden Polflächen bilden, die den Dauermagneten durch einen schmalen Luftspalt getrennt gegenüberliegen. Die beiden Teile liegen in einem Bereich 81 zwischen den zwei Biegungen nicht aufeinander und sind dort, wo sie aufeinander liegen, fest miteinander verbunden, z.B. verklebt. Ihr zentraler, scheibenförmiger Teil ist radial geschlitzt (Fig. 2), was der Bildung von Wirbelströmen in Umfangsrichtung entgegenwirkt. Die Polflächen verjüngen sich nach vorne und verlaufen nicht symmetrisch sondern schräg zur Achsrichtung (untere Hälfte von Fig. 1). Dadurch wird das zum Antrieb notwendige Moment gleichmäßiger.

Der Spulenkern und die Spule sind gemäß A1 dicht um die Achse 9 angeordnet, so daß zwischen Spule und Polkörper ein großer, rotationssymmetrischer Leerraum bleibt, der im gezeigten Beispiel wegen der zwei Biegungen der Polkörper einen etwa trapezförmigen Querschnitt hat.

Der Spulenkern und die beiden Polkörper sind mit zwei Spannschrauben 10,10′ mit der Achse verspannt und tragen dadurch zu deren Versteifung bei. Außerdem sind auf die Achse gespannt die Nabenlager 11,11′, die vorzugsweise als Rillenkugellager ausgebildet sind., Distanzringe 12,12′ und Kontermuttern 13,13′. Durch die Verspannung des Spulenkörpers 7 auf der Achse wird eine Versteifung der Achse erreicht, sodaß die Achse selbst dünn und aus einem leichten Werkstoff (Aluminiumlegierung) hergestellt werden kann.

Die Stromdurchführung vom Nabeninneren nach außen erfolgt vorzugsweise über einen in einer Längsbohrung der Achse steckenden isolierten Kontaktstift 14, der über eine radial durch die Spannmutter 10 geführt isolierte Kontaktschraube 15 mit einem Ende der Wicklung 6 verbunden ist. Das andere Wicklungsende ist auf Masse gelegt. Zum Anschluß an die Beleuchtungseinrichtung wird auf das Achsende ein Koaxialstecker gesteckt. Wenn kein Licht benötigt wird, wird der Stromkreis durch einen Schalter unterbrochen.

Da in einem Nabendynamo ohne Getriebe keine Reibungsverluste auftreten und die ohmschen Verluste durch die Minimierung des elektrischen Widerstands der Wicklung gering sind, sind für den Wirkungsgrad bei eingeschaltetem Licht und die Verluste bei ausgeschaltetem Licht (Leerlauf) im wesentlichen die Ummagnetisierungsverluste (Hysterese- und Wirbelstromverluste) entscheiden. Diese treten in denjenigen Bauteilen auf, die von einem zeitlich wechselnden magnetischen Fluß durchsetzt sind, das sind der Spulenkern und die Polkörper. Um die Wirbelströme zu begrenzen werden solche Bauteile in elektrischen Maschinen üblicherweise geschichtet aus isoliertem Elektroblech aufgebaut.

Für die Polkörper kommt nichtkornorientiertes Elektroblech in Betracht. Um die Biegesteifigkeit der Klauen zu erhöhen und damit ihrer Verformung durch die magnetischen Anzugskräfte entgegenzuwirken, ist es zweckmäßig, die Schichten miteinander zu verbinden, z.B. durch Verkleben (A 3). Darüber hinaus kann die Biegesteifigkeit erhöht werden, wenn im Bereich des größten Biegemomentes nicht alle Schichten aneinander anliegen (A 4). Zur Versteifung können die Klauen aber auch in Umfangsrichtung miteinander verbunden oder durch ein oder mehrere geeignete Bauteile in radialer Richtung gehalten werden. Gleichzeitig können dadurch die Polkörper daran gehindert werden, sich gegeneinander zur verdrehen und deren winkelgenaue Montage kann erleichtert werden.

Der Spulenkern wird vorteilhafterweise in mehreren Lagen aus einem Streifen dünnen, kornorientierten Elektroblechs so gewickelt, daß die magnetische Vorzugsrichting in Achsrichtung liegt (A 7). Dadurch erhält man auf einfache Weise ein annähernd hohlzylinderförmiges Bauteil, das quer zur Achsrichtung dünn geschichtet ist und außerdem in Achsrichtung eine hohe magnetische Flußdichte ermöglicht, was wiederum einen kleinen Durchmesser von Kern und Wicklung erlaubt. Um einen Kurzschluß zwischen Anfang und Ende des Blechstreifens zu vermeiden, müssen die Stirnflächen des Spulenkerns oder die daran angrenzenden Bauteile (die Polkörper) mit einer Isolierschicht versehen oder durch ein elektrisch isolierendes Bauteil voneinander getrennt werden.

Trotz dieser Maßnahmen zur Verminderung der Ummagnetisierungsverluste verbleibt eine gewisse Leistungsaufnahme auch im Leerlauf, wenn das Licht lediglich durch Unterbrechen des Stromkreises ausgeschaltet wird. Unter Umständen, vor allem bei höheren Geschwindigkeiten, kann durch Hurzschließen der Wicklung diese Leistungsaufnahme verringert werden, denn der durch die Wicklung fließende Kurzschlußstrom verdrängt einen Teil des magnetischen Flusses aus dem Spulenkern und den Polkörpern, so daß die Ummagnetisierungsverluste geringer werden. Die dafür in der Spule auftretenden ohmschen Verluste sind wegen des geringen Innenwiderstandes einer Nabenlichtmaschine nach A 1 gering.

Eine andere Ummagnetisierungsverluste weitgehend reduzierende Möglichkeit, eine Lichtmaschine nach A 1 abzuschalten, besteht darin, den Magnetrotor in axialer Richtung zweigeteilt auszuführen und die zwei Teile um einen Polschritt gegeneinander zu verdrehen, sodaß der magnetische Fluß von einer Magnetpolhälfte über die Polfläche eines Polkörpers in die nun danebenliegende, entgegengesetzt polarisierte Magnetpolhälfte treten kann. Ein solcher Abschaltmechanismus ist vor allem dann interessant, wenn statt einzelner Magnetteile ein mehrpoliger, ringförmiger Magnet zum Einsatz kommt.

Die weitgehende Art, den Generator abzuschalten, besteht darin, die Relativbewegung zwischen Stator und Rotor zu unterbinden. Bei einem Nabendynamo nach A 1 kann das am einfachsten dadurch geschehen, daß der Magnetrotor drehbar in der Nabenhülse gelagert ist und nur bei Bedarf mit dieser gekuppelt wird.

Wird der Generator im Leerlauf jedoch nicht abgeschaltet, kann ein Nabendynamo nach A 1 vorteilhafterweise zusätzlich dazu genutzt werden, Batterien für eine Standlichtversorgung aufzuladen, Impulse für einen Fahrradcomputer zu geben (Geschwindigkeits- und Wegstreckenmessung) oder bei einer kombinierten Anlage beide Aufgaben zu erfüllen.

## Patentansprüche

1. Nabenlichtmaschine, insbesondere für Fahrräder, mit einer koaxial zur Nabenachse (9) gewickelten Spule (6) mit einem Spulenkern (7), einem Dauermagnetrotor sowie Polkörpern (8,8′) zur Umlenkung des magnetischen Flusses von Dauermagnetrotor (2,3,4) zum Spulenkern, **dadurch gekennzeichnet**, daß die Spule (6) zwischen zwei in Achsrichtung beabstandeten Lagern (11,11′) der Nabe dicht um die Achse angeordnet ist und daß der Innendurchmesser der Magnetrotoranordnung mindestens 50% größer ist als der Außendurchmesser der Spule.

2. Nabenlichtmaschine nach Anspruch 1, **dadurch gekennzeichnet**, daß die Ausdehnung der Spule (6) in Achsrichtung größer ist als ihr Außenradius.

3. Nabenlichtmaschine nach Anspruch 1 oder Anspruch 2, **dadurch gekennzeichnet,** daß die Polkörper (8,8′) aus mehreren fest miteinander verbundenen Blechschichten aufgebaut sind.

4. Nabenlichtmaschine nach Anspruch 3, **dadurch gekennzeichnet**, daß in einem Teilabschnitt der Polkörper die Blechschichten voneinander beabstandet verlaufen.

5. Nabenlichtmaschine nach Anspruch 1, **dadurch gekennzeichnet,** daß der Spulenkern (7) als Teil der Achse oder als die Achse versteifendes Bauteil ausgeführt ist.

6. Nabenlichtmaschine nach Anspruch 5, **dadurch gekennzeichnet,** daß der Spulenkern als hohlzylindrisches Teil die Achse umgibt und mit dieser verspannt ist.

7. Nabenlichtmaschine nach einem der vorherigen Ansprüche, **dadurch gekennzeichnet**, daß der Spulenkern aus einem dünnen Blech mehrlagig gewickelt ist, wobei die Lagen elektrisch gegeneinander isoliert sind.

8. Nabenlichtmaschine nach einem der vorherigen Ansprüche, **dadurch gekennzeichnet,** daß das Blech ein kornorientiertes Elektroblech ist und die magnetische Vorzugsrichtung in Achsrichtung verläuft.

9. Nabenlichtmaschine nach einem der vorherigen Ansprüche, **dadurch gekennzeichnet,** daß die Nabenhülse (1,1′,2) ein mechanisch tragendes Teil aus magnetisierbarem Material aufweist, das als Rückschlußring der innenliegenden Magnetanordnung dient.

## Claims

1. A hub generator, more particularly for bicycles, having: a coil (6) wound coaxially with the hub axle (9) and having a coil core (7); a permanent magnet rotor; and pole pieces (8, 8′) for deflecting the magnetic flux from the permanent magnet rotor (2, 3, 4) to the coil core, characterized in that the coil (6) is disposed tightly around the axle between two axially spaced-out bearings (11, 11′) of the hub, and the internal diameter of the magnet rotor arrangement is at least 50% larger than the external diameter of the coil.

2. A hub generator according to claim 1, characterized in that the extension of the coil (6) in the axial direction is larger than its external radius.

3. A hub generator according to claims 1 or 2, characterized in that the pole pieces (8, 8′) are built up from a number of rigidly interconnected sheet metal layers.

4. A hub generator according to claim 3, characterized in that the sheet metal layers extend spaced-out in a portion of the pole pieces.

5. A hub generator according to claim 1, characterized in that the coil core (7) is constructed as part of the axle or as a constructional member reinforcing the axle.

6. A hub generator according to claim 5, characterized in that the coil core is a hollow cylindrical member enclosing the axle and clamped thereto.

7. A hub generator according to one of the preceding claims, characterized in that the coil core is wound in several layers from a thin metal sheet, said layers being electrically insulated from one another.

8. A hub generator according to one of the preceding claims, characterized in that the metal sheet is a grain-oriented magnetic steel sheet and the magnetic privileged direction extends in the axial direction.

9. A hub generator according to one of the preceding claims, characterized in that the hub sleeve (1, 1′, 2) has a mechanically supporting part of magnetizable material which acts as a return ring of the internal magnet arrangement.

## Revendications

1. Dynamo de moyeu, en particulier pour bicyclettes, avec une bobine (6) enroulée coaxialement à l'axe de moyeu (9), avec un noyau de bobine (7), un rotor à aimant permanent ainsi que des corps polaires (8, 8′) pour dévier le champ magnétique du rotor à aimant permanent (2, 3, 4) vers le noyau de bobine,
caractérisée en ce que la bobine (6) est disposée autour de l'axe près du moyeu entre deux paliers (11, 11′) écartés en direction axiale et que le diamètre intérieur de l'ensemble de rotor à aimant est plus grand d'au moins 50% que le diamètre extérieur de la bobine.

2. Dynamo de moyeu selon la revendication 1,
caractérisée en ce que la dimension de la bobine (6) en direction axiale est supérieure à son rayon extérieur.

3. Dynamo de moyeu selon la revendication 1 ou la revendication 2,
caractérisée en ce que les corps polaires (8, 8′) sont constitués de plusieurs couches de tôle reliées de manière fixe les unes aux autres.

4. Dynamo de moyeu selon la revendication 3,
caractérisée en ce que, dans une section partielle des corps polaires, les couches de tôle s'étendent écartées les unes des autres.

5. Dynamo de moyeu selon la revendication 1,
caractérisée en ce que le noyau de bobine (7) est réalisé sous forme d'une partie de l'axe ou d'une pièce de construction rigidifiant l'axe.

6. Dynamo de moyeu selon la revendication 5,
caractérisée en ce que le noyau de bobine entoure l'axe sous forme d'une pièce cylindrique creuse et est rigidifié avec celui-ci.

7. Dynamo de moyeu selon l'une des revendications précédentes,
caractérisée en ce que le noyau de bobine est en tôle mince enroulée en plusieurs couches, les couches étant isolées électriquement les unes des autres.

8. Dynamo de moyeu selon l'une des revendications précédentes,
caractérisée en ce que la tôle est une tôle électrique à grains orientés et la direction d'orientation magnétique préférentielle s'étend en direction axiale.

9. Dynamo de moyeu selon l'une des revendications précédentes,
caractérisée en ce que la douille de moyeu (1, 1′, 2) présente une pièce porteuse mécaniquement en matériau magnétisable qui sert de boucle de fermeture de l'ensemble d'aimant se trouvant à l'intérieur.
